# EUROPEAN PATENT SPECIFICATION

(11) **EP 4 417 476 B1**
(45) Date of publication and mention of the grant of the patent: **22.10.2025**
(21) Application number: 23742747.1
(22) Date of filing: 09.01.2023
(51) Int. Cl.: B60W 30/085, B60W 50/14, B60W 30/095, B60W 50/12

(54) **METHOD AND SYSTEM FOR REDUCING COLLISION DAMAGE**
VERFAHREN UND SYSTEM ZUR VERRINGERUNG VON KOLLISIONSSCHÄDEN
PROCÉDÉ ET SYSTÈME DE RÉDUCTION DE DOMMAGES DE COLLISION

(30) Priority: 18.01.2022 CN 202210054591
(43) Date of publication of application: 21.08.2024
(73) Proprietor: Wuhan Lotus Cars Co., Ltd., Wuhan, Hubei 430070 (CN)
(72) Inventor: WANG, Fei, Wuhan, Hubei 430070 (CN)
(74) Representative: Ziebig Hengelhaupt Intellectual Property Attorneys Patentanwaltskanzlei PartGmbB
(86) International application number: PCT/CN2023/071401
(87) International publication number: WO 2023/138432

(56) References cited:
- WO-A1-2005/001792
- CN-A- 102 030 006
- CN-A- 106 891 890
- CN-A- 108 068 803
- CN-A- 113 306 550
- CN-A- 114 291 078
- US-A1- 2018 126 983
- US-A1- 2019 143 964
- US-A1- 2019 276 012
- US-A1- 2019 291 728
- LU, JIA; JIANG, GONGLIANG: "Research on Automobile Safety Based on ITS", AUTO & SAFETY, CHINA SECURITY AND ANTI-COUNTERFEITING CERTIFICATE DEVELOPMENT CENTER, CN, no. 9, 1 September 2008 (2008-09-01), CN , pages 58 - 59, XP009547812, ISSN: 1006-6713

## Description

### FIELD OF THE INVENTION

The present invention relates to the field of automobiles, and particularly to a method and system for reducing collision damage.

### BACKGROUND OF THE INVENTION

During an accident collision of a vehicle, due to differences of vehicle-body structural strength, an energy-absorbing collapsing device, a passive safety configuration, or the like, of the vehicle, different collision angles of a same collision target may cause quite different degrees of damage to a driver, a passenger and the vehicle. For example, during a 40% head-on collision, collision energy is absorbed by deformation of an anti-collision beam at a front end of a vehicle body, or the like, such that a collision wall can be effectively prevented from entering a passenger compartment, and safety of the passenger is protected; during a 25% head-on collision, the collision wall enters the passenger compartment from one side of the vehicle and is in contact with an A pillar of the vehicle, such that the damage to the passenger is larger.

In addition, during the accident collision of the vehicle, the same collision angle causes different collision damage degrees due to a difference of the collision targets. For example, if a forward target is a large truck, the head-on collision may cause a dangerous scenario of getting into the bottom of the truck, but if the forward target is a small vehicle, the damage degree of the head-on collision may be minimal.

US 2019/276012 A1, US 2019/143964 A1 and US 2018/126983 A1 disclose methods and systems relevant as a background of the invention.

### BRIEF DESCRIPTION OF THE INVENTION

An object of the present invention is to provide a method for reducing collision damage by changing collision parameters of a vehicle during a collision, and a system for reducing collision damage.

A further object of the present invention is to enable determination of the collision damage to be performed programmatically.

In particular, the present invention provides a method for reducing collision damage according to claim 1. The method includes
calculating in advance a first collision damage degree for a collision target and a collision angle corresponding to a current path when a collision event is certain to occur;
adjusting the collision target and the collision angle when the collision event occurs, calculating a plurality of collision damage degrees corresponding to different collision targets and different collision angles, and determining a second collision damage degree which is smallest among the plurality of collision damage degrees;
taking a smaller one of the first collision damage degree and the second collision damage degree as an optimal collision damage degree; and
executing a collision strategy corresponding to the optimal collision damage degree when a vehicle collision event occurs.

Further, the step of executing a collision strategy corresponding to the optimal collision damage degree when a vehicle collision event occurs includes:
informing a driver of the collision strategy corresponding to the optimal collision damage degree;
receiving an input operation of the driver. The method may further include:
   when the input operation of the driver is wrong, cutting off the input operation of the driver. The method includes controlling the vehicle to execute the collision strategy corresponding to the optimal collision damage degree.

Further, in or after the step of when the input operation of the driver is wrong, cutting off the input operation of the driver, and controlling the vehicle to execute the collision strategy corresponding to the optimal collision damage degree, the method further includes:
informing the driver of information indicating that the input operation of the driver is cut off and the vehicle is controlled to execute the collision strategy corresponding to the optimal collision damage degree in a voice reminding mode.

Further, the step of executing a collision strategy corresponding to the optimal collision damage degree when a vehicle collision event occurs further includes:
assisting the driver in executing the collision strategy corresponding to the optimal collision damage degree when the input operation of the driver is correct.

Further, in the step of assisting the driver in executing the collision strategy corresponding to the optimal collision damage degree when the input operation of the driver is correct, torque is added to input braking and steering torque of the driver until calculated maximum torque when the input operation of the driver is correct.

Further, in the step of calculating in advance a first collision damage degree for a collision target and a collision angle corresponding to a current path when a collision event is certain to occur, a method for judging whether the collision event is certain to occur includes:
judging whether a collision can be avoided through an operation of a host vehicle when the host vehicle is identified to have a collision risk; and
determining that the collision event is certain to occur when it is determined that the collision cannot be avoided through the operation of the host vehicle.

Further, in or after the step of calculating in advance a first collision damage degree for a collision target and a collision angle corresponding to a current path when a collision event is certain to occur, the method further includes:
controlling the host vehicle to perform various preparation operations for collision preparation.

Further, in the step of controlling the host vehicle to perform various preparation operations for collision preparation, a skylight is closed, air bag point explosion preparation and safety-belt early warning are performed, an SOS call is given, and a hazard lamp is turned on.

Further, in the step of adjusting the collision target and the collision angle when the collision event occurs, calculating a plurality of collision damage degrees corresponding to different collision targets and different collision angles, and determining a second collision damage degree which is smallest among the plurality of collision damage degrees, a method for adjusting the collision target and the collision angle when the collision event occurs includes:
acquiring a road environment, an internal environment of the host vehicle and an external environment of the host vehicle; and
determining the collision target and the collision angle which are possibly adjusted according to the road environment, the internal environment of the host vehicle and the external environment.

In particular, the present invention further discloses a system for intelligently optimizing collision damage, including a controller and a memory, wherein the memory stores a program for executing the method for reducing collision damage.

In one or more embodiments of the present invention, in a case of an unavoidable collision, the collision parameters are automatically adjusted, and an optimal collision angle and an optimal collision target are selected to bring minimal damage to the driver and a passenger.

According to the following detailed description of specific embodiments of the present invention in conjunction with drawings, those skilled in the art will better understand the aforementioned and other objects, advantages and features of the present invention.

### BRIEF DESCRIPTION OF THE DRAWINGS

Some specific embodiments of the present invention will be described below in detail in an exemplary rather than restrictive manner with reference to the drawings. Identical reference numerals in the drawings represent identical or similar components or parts. Those skilled in the art should understand that these drawings are not necessarily drawn to scale. In the drawings:
Fig. 1 is a schematic flow diagram of a method for reducing collision damage broader than the claimed method and thus not entirely covered by the claims, included for basic understanding of the background;
   and
Fig. 2 is a specific schematic flow diagram of the method for reducing collision damage according to an embodiment of the present invention.

### DETAILED DESCRIPTION

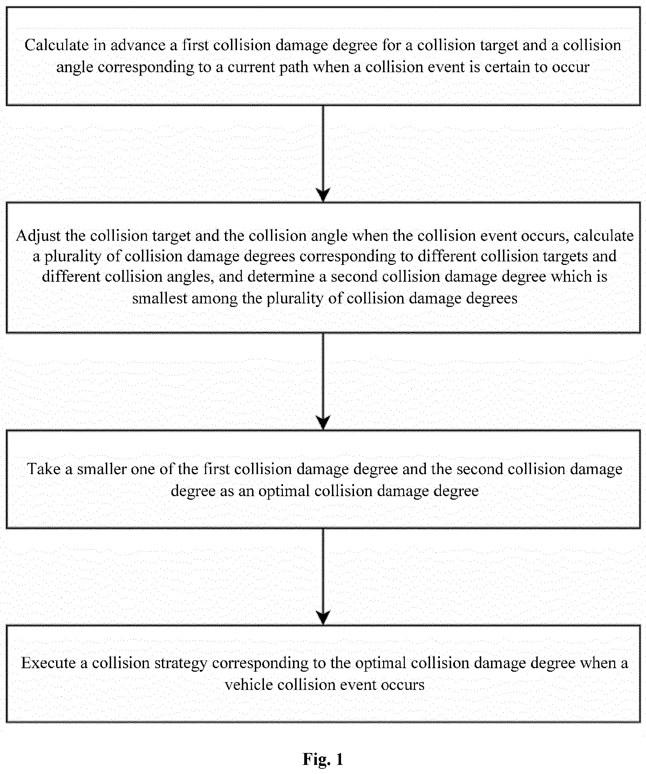

Fig. 1 is a schematic flow diagram of a method for reducing collision damage broader than the claimed method and thus not entirely covered by the claims, included for basic understanding of the background.

The diagram provides a method for reducing collision damage, which is implemented by a control system built in a vehicle and includes:
calculating in advance a first collision damage degree for a collision target and a collision angle corresponding to a current path when a collision event is certain to occur;
adjusting the collision target and the collision angle when the collision event occurs, calculating a plurality of collision damage degrees corresponding to different collision targets and different collision angles, and determining a second collision damage degree which is smallest among the plurality of collision damage degrees;
taking a smaller one of the first collision damage degree and the second collision damage degree as an optimal collision damage degree; and
executing a collision strategy corresponding to the optimal collision damage degree when a vehicle collision event occurs.

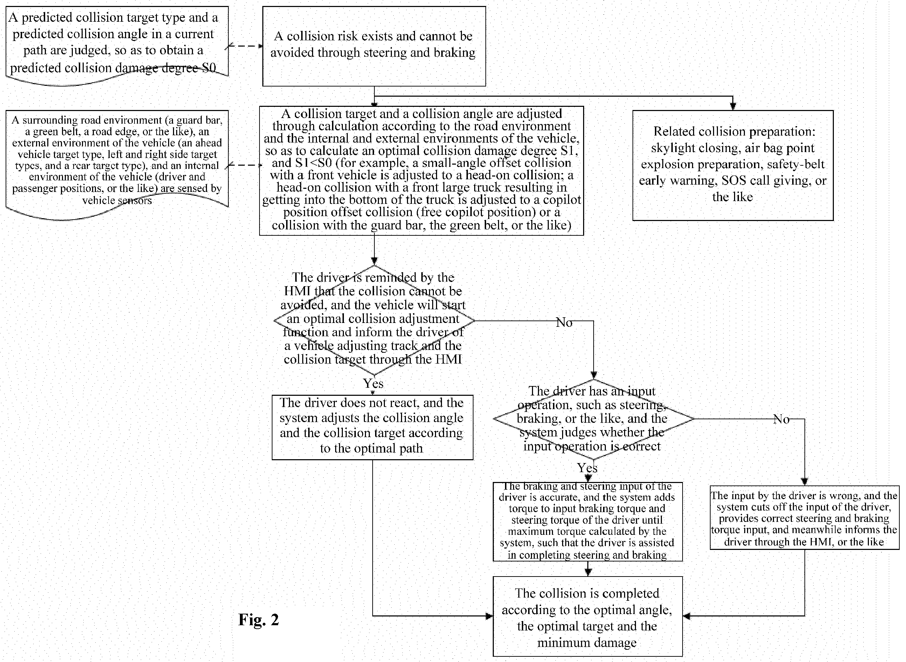

Fig. 2 is a specific schematic flow diagram of the method for reducing collision damage according to an embodiment of the present invention. According to an embodiment of the present invention, the method for reducing collision damage includes:
(1) by a system, judging a predicted collision target type and a predicted collision angle in a current path, and calculating a predicted collision damage degree S0; judging a collision risk according to the predicted collision damage degree S0, and if the collision risk exists and cannot be avoided through steering and braking, executing a next step, and controlling a vehicle to carry out relevant preparation operations of collision preparation before the next step is executed;
(2) adjusting, by the system, a collision target and a collision angle through calculation according to a road environment and internal and external environments of the vehicle, so as to obtain an optimal collision damage degree S1 and obtain an optimal path when the optimal collision damage degree S1 is obtained; recording a related action when the optimal path is executed as an optimal collision strategy;
(3) if S1<S0, reminding, by a human machine interface (HMI) of the vehicle, a driver that the vehicle will start an optimal collision function to execute the optimal collision strategy and inform the driver of a vehicle adjusting track and the collision target through the HMI;
(3.1) if the driver does not react, adjusting, by the system, the collision angle and the collision target according to the optimal path, and finishing a collision according to an optimal angle, an optimal target and a minimum damage degree;
(3.2) if the driver has actions of inputting operation commands, such as steering, braking, or the like, judging, by the system, whether an input operation is correct;
(3.2.1) if the input operation commands, such as braking, steering, or the like, of the driver are accurate, adding, by the system, additional torque on braking torque and steering torque of the driver until maximum torque calculated by the system, such that the driver is assisted in completing steering and braking, and the collision is completed according to the optimal angle, the optimal target and the minimum damage degree; and
(3.2.2) if the system judges that the control command input by the driver is wrong, by the system, cutting off the input of the driver and providing the optimal path when the optimal collision damage degree S1 is realized, such that the whole vehicle can obtain correct steering and braking torque input, and the driver is informed of the process through the HMI, or the like; completing, by the system, the collision according to the optimal angle, the optimal target and the minimum damage degree.

According to an embodiment of the present invention, in the step (1), when the collision risk is determined to exceed a set value, the system determines that a collision event is certain to occur, the system is required to calculate in advance a predicted collision damage degree S0₀ for the collision target and the collision angle corresponding to the current path when the collision event is certain to occur, and the predicted collision damage degree S0 may be recorded as a first collision damage degree in the system; in the step (2), the system is required to adjust the collision target and the collision angle when the collision event occurs, calculate a plurality of collision damage degrees S0₁, S0₂, ..., S0ₙ corresponding to different collision targets and different collision angles, and determine a smallest one in the plurality of collision damage degrees as a second collision damage degree; in the step (3), the predicted collision damage degree S0 is compared with the second collision damage degree, and the system selects a smaller one as an optimal collision damage degree S1; and a collision strategy corresponding to the optimal collision damage degree S1 is executed when a vehicle collision event occurs.

According to an embodiment of the present invention, in the step (3), the step (3.1), the step (3.2), the step (3.2.1) and the step (3.2.2), the step of executing a collision strategy corresponding to the optimal collision damage degree when a vehicle collision event occurs is shown. More specifically, in the step (3), the system informs the driver of the collision strategy corresponding to the optimal collision damage degree through the HMI and other modes (such as a voice, AR projection, or the like), the driver makes judgment and performs corresponding operations, and the operations are converted into electric signals input into the system through certain steps, such that the system receives the input operations of the driver; the system continuously receives the input operations of the driver, compares the input operations of the driver with operations in the optimal collision strategy, and determines that the input operation of the driver is correct if a comparison result is that they are close to each other, and that the input operation of the driver is wrong if the comparison result is that they are not close to each other. When the input operation of the driver is correct, the system assists the driver in executing the collision strategy corresponding to the optimal collision damage degree through an automatic function, and specifically, the system adds torque to the input braking and steering torque of the driver until the calculated maximum torque.

According to an embodiment of the present invention, when the input operation of the driver is wrong, the system cuts off the input operation of the driver, the cut-off operation is executed by an ECU of the vehicle, and as is well known, for an intelligent vehicle with an automatic cruise function, the system can automatically control various actions of the vehicle; after the input operation of the driver is cut off, the system executes the optimal collision strategy.

According to an embodiment of the present invention, the driver is informed of key steps of the system all in at least one mode, the key steps of the system include: cutting off the input operation of the driver and controlling the vehicle to execute the collision strategy corresponding to the optimal collision damage degree, and the informing mode at least includes the HMI, voice reminding and AR display.

According to an embodiment of the present invention, the step of comparing the input operation of the driver with an operation in the optimal collision strategy specifically includes: calculating a traveling path of the vehicle according to a current operation of the driver, and if the calculated traveling path of the vehicle is similar to a traveling path when the optimal collision strategy is realized (a deviation ratio does not exceed a set value, such as 5%), determining that the input operation of the driver is correct; otherwise, determining that the input operation is not correct.

According to an embodiment of the present invention, in the step of calculating in advance a first collision damage degree for a collision target and a collision angle corresponding to a current path when a collision event is certain to occur, a method for judging whether the collision event is certain to occur includes:
(1.1) judging whether a collision can be avoided through an operation of a host vehicle when the host vehicle is identified to have a collision risk; it may be understood that, in this step, the identification of the collision risk of the host vehicle is realized using an existing technology, and the collision avoidance through the operation of the host vehicle requires calculation of the traveling path caused by the operation of the host vehicle; and
(1.2) determining that the collision event is certain to occur when it is determined that the collision cannot be avoided through the operation of the host vehicle. It may be understood that the result which may be caused by the operation of the host vehicle can be determined through the traveling path in combination with an existing host-vehicle collision risk identification method.

According to an embodiment of the present invention, in or after the step of calculating in advance a first collision damage degree for a collision target and a collision angle corresponding to a current path when a collision event is certain to occur, the method further includes:
(1.3) controlling the host vehicle to perform various preparation operations for collision preparation;
(1.4) the step of controlling the host vehicle to perform various preparation operations for collision preparation including: closing a skylight, performing air bag point explosion preparation and safety-belt early warning, giving an SOS call, and turning on a hazard lamp.

According to an embodiment of the present invention, the step of adjusting, by the system, a collision target and a collision angle through calculation according to a road environment and internal and external environments of the vehicle specifically includes:
(2.1) acquiring the road environment, the internal environment of the host vehicle and the external environment of the host vehicle; a specific method for acquiring the road environment can include directly calling an existing electronic map, the internal environment of the host vehicle can be obtained by calling ECU data of the host vehicle, and a specific method for acquiring the external environment of the host vehicle can include acquiring the external environment by using a camera; and
(2.2) determining the collision target and the collision angle which are possibly adjusted according to the road environment, the internal environment of the host vehicle and the external environment.

In particular, the present invention further discloses a system for intelligently optimizing collision damage, including a controller and a memory, wherein the memory stores a program for executing the method for reducing collision damage according to any of the above descriptions.

So far, those skilled in the art should be aware that, although plural exemplary embodiments of the present invention have been shown and described herein in detail, a lot of other variations or modifications conforming to the principle of the present invention can still be directly determined or derived from the contents disclosed herein. The scope of the present invention is defined by the appended claims.

## Claims

1. A method for reducing collision damage implemented by a control system built in a vehicle, comprising:
calculating in advance a first collision damage degree for a collision target and a collision angle corresponding to a current path when a collision event is certain to occur;
adjusting the collision target and the collision angle when the collision event occurs, calculating a plurality of collision damage degrees corresponding to different collision targets and different collision angles, and determining a second collision damage degree which is smallest among the plurality of collision damage degrees;
taking a smaller one of the first collision damage degree and the second collision damage degree as an optimal collision damage degree; and
executing a collision strategy corresponding to the optimal collision damage degree when a vehicle collision event occurs; **characterized in that**
wherein the step of executing a collision strategy corresponding to the optimal collision damage degree when a vehicle collision event occurs comprises:
informing a driver of the collision strategy corresponding to the optimal collision damage degree;
receiving an input operation of the driver; and
assisting the driver in executing the collision strategy corresponding to the optimal collision damage degree when the input operation of the driver is judged by the control system to be correct;
wherein in the step of assisting the driver in executing the collision strategy corresponding to the optimal collision damage degree when the input operation of the driver is judged by the control system to be correct, torque is added to input braking and steering torque of the driver until calculated maximum torque when the input operation of the driver is judged by the control system to be correct.

2. The method for reducing collision damage according to claim 1, wherein the step of executing a collision strategy corresponding to the optimal collision damage degree when a vehicle collision event occurs further comprises:
when the input operation of the driver is judged by the control system to be wrong, cutting off the input operation of the driver, and controlling the vehicle to execute the collision strategy corresponding to the optimal collision damage degree.

3. The method for reducing collision damage according to claim 2, wherein in or after the step of when the input operation of the driver is judged by the control system to be wrong, cutting off the input operation of the driver, and controlling the vehicle to execute the collision strategy corresponding to the optimal collision damage degree, further comprising:
informing the driver of information indicating that the input operation of the driver is cut off and the vehicle is controlled to execute the collision strategy corresponding to the optimal collision damage degree in a voice reminding mode.

4. The method for reducing collision damage according to any one of claims 1 to 3, wherein in the step of calculating in advance a first collision damage degree for a collision target and a collision angle corresponding to a current path when a collision event is certain to occur, a method for judging whether the collision event is certain to occur comprises:
judging whether a collision can be avoided through an operation of a host vehicle when the host vehicle is identified to have a collision risk; and
determining that the collision event is certain to occur when it is determined that the collision cannot be avoided through the operation of the host vehicle.

5. The method for reducing collision damage according to any one of claims 1 to 3, in or after the step of calculating in advance a first collision damage degree for a collision target and a collision angle corresponding to a current path when a collision event is certain to occur, further comprising:
controlling a host vehicle to perform various preparation operations for collision preparation.

6. The method for reducing collision damage according to claim 5, wherein in the step of controlling the host vehicle to perform various preparation operations for collision preparation, a skylight is closed, air bag point explosion preparation and safety-belt early warning are performed, an SOS call is given, and a hazard lamp is turned on.

7. The method for reducing collision damage according to any one of claims 1 to 3, wherein in the step of adjusting the collision target and the collision angle when the collision event occurs, calculating a plurality of collision damage degrees corresponding to different collision targets and different collision angles, and determining a second collision damage degree which is smallest among the plurality of collision damage degrees, a method for adjusting the collision target and the collision angle when the collision event occurs comprises:
acquiring a road environment, an internal environment of a host vehicle and an external environment of the host vehicle; and
determining the collision target and the collision angle which are possibly adjusted according to the road environment, the internal environment of the host vehicle and the external environment.

8. A system for intelligently optimizing collision damage, comprising a controller and a memory, wherein the memory stores a program for executing the method for reducing collision damage according to any one of claims 1 to 7.

## Patentansprüche

1. Verfahren zum Reduzieren von Kollisionsschäden, das von einem Steuersystem implementiert wird, das in einem Fahrzeug eingebaut ist, umfassend:
Berechnen im Voraus eines ersten Kollisionsschadensgrads für ein Kollisionsziel und einen Kollisionswinkel, die einem aktuellen Pfad entsprechen, wenn ein Kollisionsereignis sicher eintreten wird;
Anpassen des Kollisionsziels und des Kollisionswinkels, wenn das Kollisionsereignis eintritt, Berechnen mehrerer Kollisionsschadensgrade, die verschiedenen Kollisionszielen und verschiedenen Kollisionswinkeln entsprechen, und Bestimmen eines zweiten Kollisionsschadensgrads, der unter den mehreren Kollisionsschadensgraden der kleinste ist;
Verwenden des kleineren des ersten Kollisionsschadensgrads und des zweiten Kollisionsschadensgrads als optimalen Kollisionsschadensgrad; und
Ausführen einer Kollisionsstrategie, die dem optimalen Kollisionsschadensgrad entspricht, wenn ein Fahrzeugkollisionsereignis eintritt; **dadurch gekennzeichnet, dass**
der Schritt des Ausführens einer Kollisionsstrategie, die dem optimalen Kollisionsschadensgrad entspricht, wenn ein Fahrzeugkollisionsereignis eintritt, umfasst:
Informieren eines Fahrers über die Kollisionsstrategie, die dem optimalen Kollisionsschadensgrad entspricht;
Empfangen eines Eingabevorgangs des Fahrers; und
Unterstützen des Fahrers beim Ausführen der Kollisionsstrategie, die dem optimalen Kollisionsschadensgrad entspricht, wenn der Eingabevorgang des Fahrers durch das Steuersystem als korrekt beurteilt wird;
wobei in dem Schritt des Unterstützens des Fahrers beim Ausführen der Kollisionsstrategie, die dem optimalen Kollisionsschadensgrad entspricht, wenn der Eingabevorgang des Fahrers durch das Steuersystem als korrekt beurteilt wird, Drehmoment zu dem vom Fahrer eingegebenen Brems- und Lenkdrehmoment hinzugefügt wird, bis das berechnete maximale Drehmoment erreicht ist, wenn der Eingabevorgang des Fahrers durch das Steuersystem als korrekt beurteilt wird.

2. Verfahren zum Reduzieren von Kollisionsschäden nach Anspruch 1, wobei der Schritt des Ausführens einer Kollisionsstrategie, die dem optimalen Kollisionsschadensgrad entspricht, wenn ein Kollisionsereignis des Fahrzeugs eintritt, ferner umfasst:
wenn der Eingabevorgang des Fahrers durch das Steuersystem als falsch beurteilt wird, Abschneiden des Eingabevorgangs des Fahrers und Steuern des Fahrzeugs, um die Kollisionsstrategie auszuführen, die dem optimalen Kollisionsschadensgrad entspricht.

3. Verfahren zum Reduzieren von Kollisionsschäden nach Anspruch 2, welches in oder nach dem Schritt des Abschneidens des Eingabevorgangs des Fahrers und Steuerns des Fahrzeugs, um die Kollisionsstrategie auszuführen, die dem optimalen Kollisionsschadensgrad entspricht, wenn der Eingabevorgang des Fahrers durch das System als falsch beurteilt wird, ferner umfasst:
Informieren des Fahrers über Informationen, die angeben, dass der Eingabevorgang des Fahrers abgeschnitten wird und das Fahrzeug gesteuert wird, um die Kollisionsstrategie auszuführen, die dem optimalen Kollisionsschadensgrad entspricht, in einem Spracherinnerungsmodus.

4. Verfahren zum Reduzieren von Kollisionsschäden nach einem der Ansprüche 1 bis 3, wobei in dem Schritt des Berechnens im Voraus eines ersten Kollisionsschadensgrads für ein Kollisionsziel und einen Kollisionswinkel, die einem aktuellen Pfad entsprechen, wenn ein Kollisionsereignis sicher eintreten wird, ein Verfahren zum Beurteilen, ob das Kollisionsereignis sicher eintreten wird, umfasst:
Beurteilen, ob eine Kollision durch einen Vorgang eines Trägerfahrzeugs vermieden werden kann, wenn identifiziert wird, dass das Trägerfahrzeug ein Kollisionsrisiko aufweist; und
Bestimmen, dass das Kollisionsereignis sicher eintreten wird, wenn bestimmt wird, dass die Kollision nicht durch Vorgänge des Trägerfahrzeugs vermieden werden kann.

5. Verfahren zum Reduzieren von Kollisionsschäden nach einem der Ansprüche 1 bis 3, welches in oder nach dem Schritt des Berechnens im Voraus eines ersten Kollisionsschadensgrads für ein Kollisionsziel und einen Kollisionswinkel, die einem aktuellen Pfad entsprechen, wenn ein Kollisionsereignis sicher eintreten wird, ferner umfasst:
Steuern eines Trägerfahrzeugs dazu, verschiedene Vorbereitungsvorgänge zur Kollisionsvorbereitung durchzuführen.

6. Verfahren zum Reduzieren von Kollisionsschäden nach Anspruch 5, wobei in dem Schritt des Steuerns des Trägerfahrzeugs dazu, verschiedene Vorbereitungsvorgänge zur Kollisionsvorbereitung durchzuführen, ein Schiebedach geschlossen wird, eine Airbag-Punktexplosionsvorbereitung und eine Sicherheitsgurt-Frühwarnung durchgeführt werden, ein Notruf abgesetzt wird und eine Warnleuchte eingeschaltet wird.

7. Verfahren zum Reduzieren von Kollisionsschäden nach einem der Ansprüche 1 bis 3, wobei in dem Schritt des Anpassens des Kollisionsziels und des Kollisionswinkels, wenn das Kollisionsereignis eintritt, Berechnens mehrerer Kollisionsschadensgrade, die verschiedenen Kollisionszielen und verschiedenen Kollisionswinkeln entsprechen, und Bestimmens eines zweiten Kollisionsschadensgrads, der unter den mehreren Kollisionsschadensgraden der kleinste ist, ein Verfahren zum Anpassen des Kollisionsziels und des Kollisionswinkels, wenn das Kollisionsereignis eintritt, umfasst:
Beziehen einer Straßenumgebung, einer internen Umgebung eines Trägerfahrzeugs und einer externen Umgebung des Trägerfahrzeugs; und
Bestimmen des Kollisionsziels und des Kollisionswinkels, die möglicherweise entsprechend der Straßenumgebung, der internen Umgebung des Trägerfahrzeugs und der externen Umgebung angepasst sind.

8. System zur intelligenten Optimierung von Kollisionsschäden, aufweisend eine Steuereinrichtung und einen Speicher, wobei in dem Speicher ein Programm zum Ausführen des Verfahrens zum Reduzieren von Kollisionsschäden nach einem der Ansprüche 1 bis 7. gespeichert ist.

## Revendications

1. Procédé permettant de réduire les dommages de collision, mis en œuvre par un système de commande intégré dans un véhicule, comprenant:
calculer à l'avance un premier degré de dommages de collision pour une cible de collision et un angle de collision correspondant à une trajectoire actuelle lorsqu'un événement de collision est certain de se produire;
ajuster la cible de collision et l'angle de collision lorsque l'événement de collision se produit, calculer une pluralité de degrés de dommages de collision correspondant à différentes cibles de collision et différents angles de collision, et déterminer un deuxième degré de dommages de collision qui est le plus petit parmi la pluralité de degrés de dommages de collision;
prendre le plus petit parmi le premier degré de dommages de collision et le deuxième degré de dommages de collision comme degré optimal de dommages de collision; et
exécuter une stratégie de collision correspondant au degré optimal de dommages de collision lorsqu'un événement de collision de véhicule se produit; **caractérisé en ce que**
dans lequel l'étape consistant à exécuter une stratégie de collision correspondant au degré optimal de dommages de collision lorsqu'un événement de collision de véhicule se produit comprend:
informer le conducteur de la stratégie de collision correspondant au degré optimal de dommages de collision;
recevoir une opération d'entrée du conducteur; et
aider le conducteur à exécuter la stratégie de collision correspondant au degré optimal de dommages de collision lorsque l'opération d'entrée du conducteur est jugée correcte par le système de commande;
dans lequel l'étape consistant à aider le conducteur à exécuter la stratégie de collision correspondant au degré optimal de dommages de collision lorsque l'opération d'entrée du conducteur est jugée correcte par le système de commande, un couple est ajouté au couple de freinage et de direction d'entrée du conducteur jusqu'au couple maximal calculé lorsque l'opération d'entrée du conducteur est jugée correcte par le système de commande.

2. Procédé permettant de réduire les dommages de collision selon la revendication 1, dans lequel l'étape consistant à exécuter une stratégie de collision correspondant au degré optimal de dommages de collision lorsqu'un événement de collision de véhicule se produit comprend en outre:
lorsque l'opération d'entrée du conducteur est jugée incorrecte par le système de commande, interrompre l'opération d'entrée du conducteur, et commander le véhicule pour exécuter la stratégie de collision correspondant au degré optimal de dommages de collision.

3. Procédé permettant de réduire les dommages de collision selon la revendication 2, dans lequel, pendant ou après l'étape où l'opération d'entrée du conducteur est jugée incorrecte par le système de commande, l'interruption de l'opération d'entrée du conducteur et la commande du véhicule pour qu'il exécute la stratégie de collision correspondant au degré optimal de dommages de collision, comprenant en outre:
informer le conducteur indiquant que l'opération d'entrée du conducteur est interrompue et que le véhicule est commandé pour exécuter la stratégie de collision correspondant au degré optimal de dommages de collision dans un mode de rappel vocal.

4. Procédé permettant de réduire les dommages de collision selon l'une quelconque des revendication 1 à 3, dans lequel, lors de l'étape consistant à calculer à l'avance un premier degré de dommages de collision pour une cible de collision et un angle de collision correspondant à une trajectoire actuelle lorsqu'un événement de collision est certain de se produire, un procédé pour juger si l'événement de collision est certain de se produire comprend:
juger si une collision peut être évitée grâce à une manœuvre du véhicule hôte lorsque le véhicule est identifié comme présentant un risque de collision; et
déterminer que l'événement de collision est certain de se produire lorsqu'il est déterminé que la collision ne peut être évitée grâce à la manœuvre du véhicule hôte.

5. Procédé permettant de réduire les dommages de collision selon l'une quelconque des revendications 1 à 3, pendant ou après l'étape consistant à calculer à l'avance un premier degré de dommages de collision pour une cible de collision et un angle de collision correspondant à une trajectoire actuelle lorsqu'un événement de collision est certain de se produire, comprenant en outre:
commander un véhicule hôte pour effectuer diverses opérations de préparation pour la préparation à une collision.

6. Le procédé permettant de réduire les dommages de collision selon la revendication 5, dans lequel, lors de l'étape de commande du véhicule hôte pour effectuer diverses opérations de préparation pour la préparation à la collision, un toit ouvrant est fermé, une préparation à l'explosion du point d'airbag et l'avertissement précoce de ceinture de sécurité sont effectués, un appel SOS est lancé et un feu de détresse est allumé.

7. Procédé permettant de réduire les dommages de collision selon l'une quelconque des revendications 1 à 3, dans lequel, lors de l'étape consistant à ajuster la cible de collision et l'angle de collision lorsque l'événement de collision se produit, le calcul d'une pluralité de degrés de dommages de collision correspondant à différentes cibles de collision et différents angles de collision, et la détermination d'un deuxième degré de dommages de collision qui est le plus petit parmi la pluralité de degrés de dommages de collision, un procédé pour ajuster la cible de collision et l'angle de collision lorsque l'événement de collision se produit comprend:
acquérir un environnement routier, un environnement interne d'un véhicule hôte et un environnement externe du véhicule hôte; et
déterminer la cible de collision et l'angle de collision qui sont éventuellement ajustés en fonction de l'environnement routier, de l'environnement interne du véhicule hôte et de l'environnement externe.

8. Système permettant d'optimiser intelligemment les dommages de collision, comprenant un contrôleur et une mémoire, dans lequel la mémoire stocke un programme pour exécuter le procédé permettant de réduire les dommages de collision selon l'une quelconque des revendications 1 à 7.
